Europäisches Patentamt

European Patent Office

Office européen des brevets

(19)

(11) Numéro de publication: **0 207 865**

**B1**

(12) **FASCICULE DE BREVET EUROPÉEN**

(45) Date de publication du fascicule du brevet:
**31.08.88**

(51) Int. Cl.⁴: **F 16 L 37/28**

(21) Numéro de dépôt: **86420131.4**

(22) Date de dépôt: **20.05.86**

(54) **Perfectionnement aux coupleurs à clapets visant à permettre une connexion malgré une pression résiduelle importante dans le circuit d'utilisation.**

(30) Priorité: **21.05.85 FR 8507821**

(43) Date de publication de la demande:
**07.01.87 Bulletin 87/2**

(45) Mention de la délivrance du brevet:
**31.08.88 Bulletin 88/35**

(84) Etats contractants désignés:
**AT BE CH DE FR GB IT LI LU NL SE**

(56) Documents cité:
**EP-A-0 100 090**
**FR-A-2 384 196**

(73) Titulaire: **PARKER HANNIFIN RAK, Z.I. du Mont Blanc, F-74100 Annemasse (FR)**

(72) Inventeur: **Badoureaux, Jean- Pierre, 27 rue du Saget, F-74100 Annemasse (FR)**

(74) Mandataire: **Maureau, Pierre, Cabinet GERMAIN & MAUREAU B.P. 3011, F-69392 Lyon Cédex 03 (FR)**

## Description

La présente invention concerne un perfectionnement aux coupleurs à clapets visant à permettre une connexion malgré une pression résiduelle importante dans le circuit d'utilisation.

Cette invention concerne un coupleur à clapets équipé de moyens de raccordement rigide à une source de fluide sous pression, du type comportant un corps tubulaire externe et logeant un élément tubulaire axialement mobile dans les deux sens et dont l'extrémité antérieure correspondant à l'extrémité libre du corps tubulaire, qui constitue l'embout femelle du coupleur, porte, dans une rangée annulaire de perforations leur servant de logements, des billes de verrouillage destinées à être engagées et maintenues dans une gorge annulaire externe prévue, à cet effet, au voisinage de l'extremité de l'embout mâle associé du coupleur, un ressort de rappel tendant à ramener cet élément tubulaire dans une position intermédiaire stable dans laquelle la rangée annulaire de perforations logeant les billes de verrouillage coïncide axialement avec une nervure radiale interne à flancs coniques du corps tubulaire pour maintenir les billes en position de verrouillage, c'est-à-dire en saillie radialement à l'intérieur de l'alésage de l'élément tubulaire mobile et ce dernier portant, du côté de son extrémité postérieure, un clapet normalement maintenu en position de fermeture par un ressort de rappel destiné à être reculé en position ouverte par le clapet de l'embout mâle, lorsque ce dernier est engagé dans l'embout femelle. Dans ces coupleurs, à chaque clapet sont associés un ressort de rappel et une butée de limitation de course d'ouverture sensiblement égale à la moitié de la course d'engagement de l'embout mâle dans l'embout femelle, et dans lequel la butée associée au clapet situé du côté de l'alimentation et logé dans l'élément tubulaire mobile est constituée par un organ que s'escamote automatiquement lors de la connexion du coupleur et que est automatiquement ramené en position active lors de l'ouverure du circuit d'alimentation, après verrouillage de l'embout mâle dans l'embout femelle.

Avec les coupleurs de ce type, s'il demeure, dans le circuit d'utilisation, une pression résiduelle importante, par exemple de l'ordre de 200 bars, l'ouverture simultanée des deux clapets est impensable avant le verrouillage de l'embout mâle. Or, normalement, ce verrouillage ne peut intervenir qu'après ouverture totale des deux clapets.

Une solution consisterait à prévoir, pour le clapet situé du côté de l'alimentation, une course d'ouverture double de celle du clapet situé du côté de l'utilisation, l'ouverture de ce dernier étant alors obtenue par une pression d'alimentation supérieure à la pression résiduelle régnant dans le circuit d'utilisation. Cependant, si, en cours d'utilisation, il se produit une inversion du débit et si l'huile hydraulique utilisée est visqueuse, le clapet situé du côté de l'utilisation risque d'être entraîné en position de fermeture et de rester bloqué dans cette position par suite de l'équilibre des pressions régnant de part et d'autre.

On a tenté de remédier à cet imonvénient, d'une part, en permettant de doubler la course d'ouverture du clapet situé du côté de l'alimentation et, d'autre part, en empêchant toute possibilité de retour en position de fermeture du clapet situé du côté de l'utilisation, avant donnexion du coupleur.

Le document FR-A-2 384 196 décrit un raccord de couplage de ce type dans lequel la butée associée au clapet situé du côté de l'alimentation est agencée pour être amenee en position d'attente de blocage, après une course simple d'ouverture, dans une position d'arrêt limitant la course d'ouverture de ce clapet a cette course simple par le retour du clapet dans sa position correspondant à sa course simple, et dans une position escamotée permettant la course double du clapet par le découplage des deux éléments du raccord.

Dans ce raccord, la butée associée au clapet situé du côté de l'alimentation est constituée par un doigt logé dans le corps de l'élément correspondant du raccord et pousse radialement, par un ressort, en direction de la tige du clapet dont la tige présente, à son extrémité postérieure, une partie de plus petit diamètre dont l'épaulement intérieur est destiné à entrer en contact avec le doigt précité pour limiter normalement la course d'ouverture de ce clapet à sa valeur simple. Pour permettre au clapet une course d'ouverture double lors du couplage des deux éléments de ce raccord, la partie postérieure de faible diamètre du clapet porte une bague cylindrique de diamètre extérieur légèrement supérieur à celui de la partie de grand diamètre de la tige du clapet et dont l'extrémité tournée vers le clapet est tronconique.

Ainsi, lors de l'engagement de l'embout mâle dans l'embout femelle de ce coupleur, en raison de la pression résiduelle régnant dans le circuit d'utilisation, seul le clapet situé du côté de l'alimentation est amené en position d'ouverture et il est repoussé au-delà de sa course normale d'ouverture par le clapet situé du côté de l'utilisation puisque sa buté de fin de course normale d'ouverture est escamotée.

Ensuite, lorsqu'après ouverture du circuit d'alimentation, la pression d'alimentation supérieure à la pression résiduelle qui règne dans le circuit d'alimentation provoque l'ouverture du clapet situé du côté de l'utilisation, le débit s'établit normalement, la butée associée au clapet situé du côté de l'alimentation est ramenée en position active et le ressort de rappel de ce clapet ramène ce dernier en position normale d'ouverture, c'est-à-dire en appui contre sa butée.

Cependant, le bon fonctionnement de ce clapet exige que les forces de frottement entre la bague et le doigt radial soient supérieures à celles engendrées entre la bague et la partie de petit diamètre de la tige du clapet car, dans le cas contraire, le clapet ne pourrait jamais effectuer sa course double. Or, on conçoit aisément que l'usure de ces pièces résultant de nombreuses opérations de couplage et de découplage peut inverser les rapports des forces de frottement précitées et rendre inopérante cette butée escamotable.

Il faut noter aussi que, dans ce coupleur, les moyens de raccordement rigide à la source de fluide sous pression sont prévus à l'une des extrémités de l'élément tubulaire interne. Avec ce dispositif, pour coupler la canalisation du côté utilisation du raccord, il est nécessaire de manoeuvrer axialement l'élément tubulaire externe pour libérer les billes de verrouillage de toute contrainte radiale externe. Le couplage nécessite donc l'usage des deux mains de l'utilisateur.

La présente invention vise à éliminer totalement ce risque de mauvais fonctionnement de ce raccord. A cet effet, le coupleur est caractérisé en ce que le corps tubulaire externe est équipé, à l'une de ses extrémités, de moyens de raccordement rigide à la source de fluide sous pression et que d'une part, l'extrémité postérieure de la tige du clapet situé du côté de l'alimentation est logée dans un manchon télescopique porté, de manière étanche, par un moyeu amenagé à l'extrémité postérieure de l'élément tubulaire mobile, une butée postérieure fixe limitant la course de recul de ce manchon à une valeur inférieure à celle de l'élément tubulaire et, que d'autre part, la butée de fin de course d'ouverture de ce clapet est constituée par l'extrémite antérieure d'une pince annulaire tronconique fixée, par son extrémité postérieure rigide de grand diamètre, à la paroi interne de l'élément tubulaire mobile, cette extrémité antérieure de petit diamètre, lastiquement dilatable, étant normalement appliquée, simultanément contre le bord antérieur du manchon télescopique qui entoure la tige du clapet et contre la paroi externe cylindrique de cette tige, en arrière d'un épaulement tourné vers l'arrière de plus grand diamètre qu'elle, et ménagé à cet effet sur cette tige, le recul de l'élément tubulaire sur une ourse supérieure à celle du manchon ayant pour effet de dilater l'extrémité antérieure de la pince et de lui faire adopter un diamètre supérieur à celui de l'épaulement en la faisant glisser sur le bord antérieure du manchon.

Ainsi, lors du recul de l'élément tubulaire dans le corps du coupleur par suite de l'engagement de l'embout mâle dans l'embout femelle, le manchon télescopique est arrêté par sa butée alors que l'élément tubulaire mobile et le clapet associé poursuivent leur course, obligeant ainsi la pince à s'engager sur l'extrémité antérieure du manchon télescopique, ce qui provoque son ouverture et autorise le passage de l'épaulement de la tige du clapet qui peut, de ce fait, effectuer une course d'ouverture supérieure à la normale et, notamment, une course double.

On conçoit aisément que, lors de l'ouverture du circuit d'alimentation, après verrouillage de l'embout mâle dans l'embout femelle, la pression d'alimentation, supérieure à la pression résiduelle du circuit d'utilisation, provoque l'ouverture du clapet situé dans l'embout mâle. Le débit s'établissant normalement dans le coupleur, depuis l'alimentation en direction de l'utilisation, et le clapet situé du côté de l'utilisation n'exerçant plus de force contre le clapet situé du côté de l'alimentation, ce dernier est ramené, par son ressort de rappel, en butée contre l'autre clapet et, dans cette position, l'épaulement de sa tige repasse en avant de l'extrémité de petit diamètre de la pince. Simultanément, la très faible course de retour de l'élément tubulaire mobile suffit à désengager la pince du manchon télescopique et à permettre son retour en position active.

Ainsi, tant que les deux embouts de ce coupleur sont connectés l'un à l'autre, et même en cas d'inversion du débit, le clapet situé du côté de l'utilisation ne peut plus se refermer.

De toute façon, l'invention sera bien comprise à l'aide de la description qui suit, en référence au dessin schématique annexé représentant, à titre d'exemple non limitatif, une forme d'exécution d'un coupleur muni de ce perfectionnement:

Figure 1 en est une vue de côté en élévation avec demi-coupe axiale, montrant le corps de ce coupleur au début de l'engagement de l'embout mâle dans l'embout femelle, ce dernier étant au repos et les deux clapets fermés;

Figure 2 est une vue similaire à figure 1 montrant ce coupleur en fin d'engagement de l'embout mâle dans l'embout femelle, juste avant son verrouillage effectif dans l'embout femelle;

Figure 3 est une vue similaire aux figures 1 et 2, montrant ce coupleur après verrouillage de l'embout mâle dans l'embout femelle, mais avant ouverture du circuit d'alimentation;

Figure 4 est une vue similaire aux figures 1 à 3, montrant ce coupleur en cours d'utilisation.

Comme le montre le dessin, le coupleur auquel s'applique le perfectionnement de l'invention est un coupleur à clapets d'un type connu, comportant un corps tubulaire externe (2) muni, à son extrémité postérieure (2"), d'un embout fileté (3) équipé d'un joint torique (4) permettant son raccordement étanche à une source de fluide sous pression, non représentée sur le dessin.

Dans l'exemple illustré sur le dessin, pour des raisons de possibilités de montage, le corps tubulaire (2) est en fait composé de deux éléments coaxiaux, l'un antérieur (2a), l'autre postérieur (2b), assemblés bout à bout à l'aide d'une bague intérieure filetée (5).

Au voisinage de son extrémité antérieure (2'), le corps tubulaire (2) présente une nervure radiale interne (6) à flancs coniques, l'un interne (6a) et l'autre externe (6b), dont la fonction sera expliquée ultérieurement.

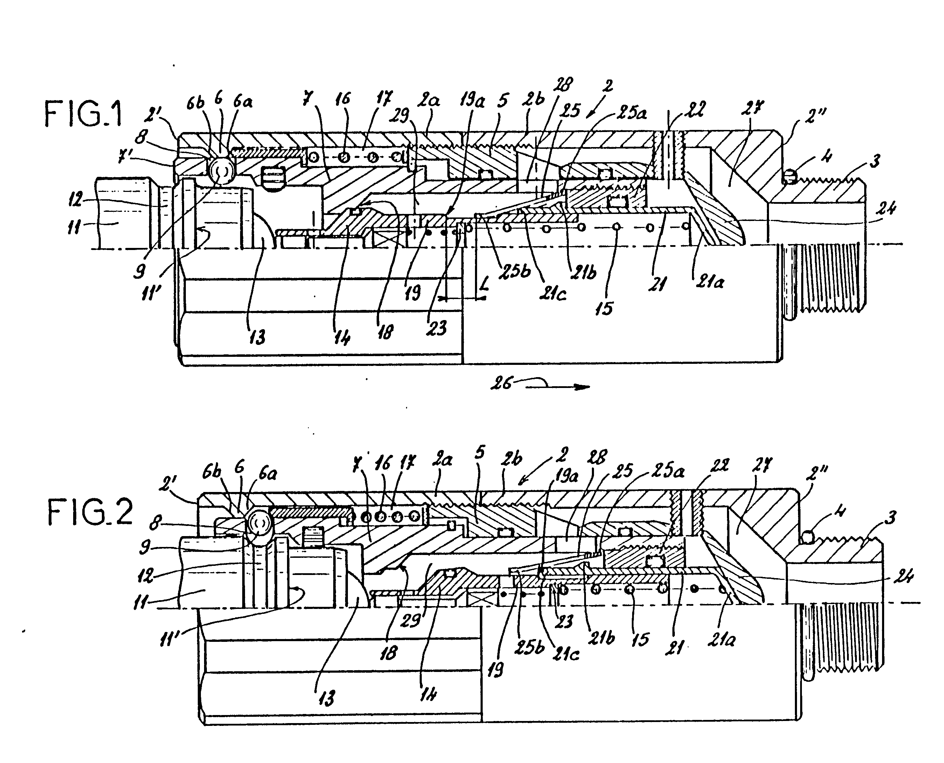

A l'intérieur du corps (2) est monté, axialement mobile dans les deux sens, un élément tubulaire interne (7) dont l'extrémité antérieure (7')
correspondant à l'extrémité antérieure (2') du
corps (2) constitue l'embout femelle du coupleur
et porte, dans une rangée annulaire de
perforations (8) leur servant de logements, des
billes de verrouillage (9) normalement
maintenues en saillie radialement à l'intérieur de
l'alésage de l'extrémité antérieure (7') de
l'élément tubulaire (7) par la nervure (6) du corps
(2), le diamètre des billes (9) étant supérieur à
l'épaisseur de la paroi de l'élément tubulaire (7)
dans la zone de la rangée annulaire de
perforations (8). Il faut noter que chaque
perforation (8) présente, à son extrémité
radialement interne, un rétreint s'opposant au
libre passage des billes (9). Ces billes sont
destinées à verrouiller, de manière connue en soi,
l'embout mâle (11) de ce coupleur, visible sur les
figures 2 à 4, par engagement dans une gorge
périphérique externe (12) prévue au voisinage de
l'extrémité libre de l'embout mâle (11).

A chacun des embouts mâle (il) et femelle (7')
de ce coupleur est associé un clapet,
respectivement (13) et (14), normalement
maintenu en position de fermeture par un ressort
de rappel. Sur le dessin, seul le ressort de rappel
(15) du clapet (14) associé à l'embout femelle (7')
est visible. Chacun de ces clapets (13) et (14) est
destiné à prendre appui contre l'autre clapet lors
de l'engagement de l'embout mâle (11) dans
l'embout femelle (7') de manière à provoquer son
ouverture et son maintien en position d'ouverture
tant que l'embout mâle (11) reste verrouillé dans
l'embout femelle (7').

Un ressort (16), entourant l'élément tubulaire
mobile (7) et par conséquent logé dans un
intervalle annulaire (17) séparant l'élément
tubulaire (7) du corps (2), tend à maintenir ce
dernier dans une position intermédiaire stable,
illustrée sur les figures 1, 3 et 4, position dans
laquelle les rangées annulaires de perforations
(8) coïncident axialement avec la nervure (6) et
par conséquent dans laquelle les billes (9) sont
maintenues par la nervure (6) en position
radialement intérieure de verrouillage.

A cet effet, le ressort (16) prend appui contre
deux paires d'épaulements équidistants en
regard l'un de l'autre, l'une de ces paires étant
ménagée sur la face cylindrique externe de
l'élément tubulaire mobile (7) tandis que l'autre
paire est ménagée dans la face cylindrique
interne du corps tubulaire (2).

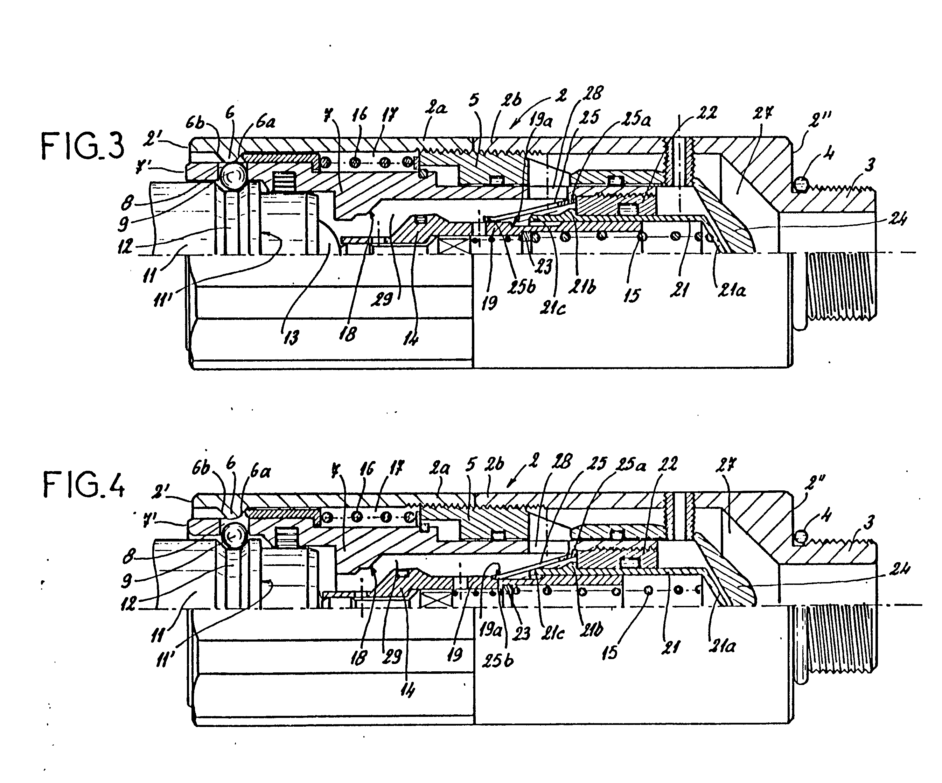

A chaque clapet (13) et (14) est associée une
butée de limitation de course d'ouverture, dont
chacune correspond sensiblement à la moitié de
la course parcourue par l'embout mâle (11) dans
l'embout femelle (7') à partir du moment où les
deux clapets (13) et (14) sont au contact l'un de
l'autre, comme illustré sur la figure 1. Dans cette
position, les deux clapets (13) et (14) sont encore
fermés. Les deux butées de fin de course
précitées ont évidemment pour but d'assurer
mécaniquement le maintien en position
d'ouverture des deux clapets (13) et (14) lorsque
l'embout mâle (11) est totalement engagé et verrouillé dans l'embout femelle (7'), comme
illustré sur la figure 4.

La butée associée au clapet (13) situé du côté
de l'utilisation n'est pas visible sur le dessin.

Comme le montre le dessin, le clapet (14) situé
du côté de l'alimentation et dont le siège (18) est
aménagé dans l'alésage de l'élément tubulaire
mobile (7), est muni d'une tige (19) portée
telescopique ment par un manchon postérieur
(21), lui-même porté, de manière à pouvoir
coulisser axialement, par une bagué (22) vissée
dans l'alésage de l'élément tubulaire (7) et lui
servant de moyeu. Comme le montre le dessin, la
tige (19) du clapet (14) est tubulaire et un ressort
(15), comprimé entre le fond (21a) du manchon
(21) et un épaulement interne (23) prévu pour lui
servir de butée dans l'alésage de la tige (19), tend
constamment à ramener le clapet (14) en position
de fermeture, comme illustré sur la figure 1.

Une butée postérieure fixe (24), portée par le
corps (2), limite la course de recul du manchon
(2l) à une valeur inférieure à celle de l'élément
tubulaire mobile (7).

Par ailleurs, un épaulement externe (21b) du
manchon (21), en appui contre la face antérieure
de la bague (22) qui lui sert de moyeu, maintient
normalement le fond (21a) du manchon (21) hors
de contact de sa butée (24).

Dans l'exemple illustré sur le dessin, la butée
escamotable limitant la course d'ouverture du
clapet (14) est constituée par une pince annulaire
tronconique (25) fixée, par son extrémité
postérieure rigide de grand diamètre (25a), à la
paroi interne de l'élément tubulaire mobile (7).

Dans l'exemple illustré sur le dessin, cette
fixation est assurée par bridage d'une collerette
ménagée à cette extrémité de la pince (25), entre
un épaulement interne de l'alésage du corps
tubulaire (7) et l'extrémité antérieure de la bague
(22) servant de moyeu au manchon (21).
L'extrémité antérieure de petit diamètre (25b),
élastiquement dilatable, est normalement
appliquée, simultanément, contre le bord
antérieur (21c) du manchon (21) et contre la paroi
externe cylindrique de la tige (19) du clapet (14).
En outre, lorsque l'élément tubulaire (7) est au
repos et le clapet (14) en position de fermeture,
comme illustré sur la figure 1, cet appui de
l'extrémité antérieure de petit diamètre (25b) de
la pince tronconique (25) est réalisé en arrière
d'un épaulement (19a) tourné vers l'arrière de la
tige (19) du clapet (14). On conçoit aisément
qu'un recul du clapet (14) et de sa tige (19) sur
une course égale à la valeur (L) correspondant à
la distance séparant l'épaulement (19a), dans la
position illustrée par la figure 1, de l'extrémité de
petit diamètre (25b) de la pince (25), a pour effet
l'entrée en contact de l'épaulement (19a) ontre
cette extrémité (25b) de la pince (25), et par
conséquent de limiter la course d'ouverture du
clapet (14) à la valeur précitée (L).

Comme indiqué précédemment, cette butée
constituée par l'extrémité antérieure (25b) de la
pince (25) est agencée pour s'escamoter au
moment de l'engagement de l'embout mâle (11) dans l'embout femelle (7') et pour revenir en position active lorsque, après verrouillage de l'embout mâle (11) dans l'embout femelle (7') par chute des billes (9) ans la gorge (12), le circuit d'alimentation est ouvert et que le fluide sous pression pénètre dans le coupleur par l'alésage de son raccord fileté (3).

Le fonctionnement de cette butée est le suivant:

Lorsque l'utilisateur poursuit l'engagement de l'embout mâle (11) dans l'embout femelle (7') au-delà de la position illustrée par la figure 1 dans laquelle les clapets (13) et (14) entrent en contact l'un avec l'autre, la pression résiduelle régnant dans le circuit d'utilisation assiste le ressort de rappel du clapet (13) permettant à ce dernier, sans s'ouvrir lui-même, de provoquer l'ouverture du clapet (14) dont le ressort de rappel (15) n'est pas d'une force supérieure à celle du ressort du clapet (13). Pendant ce temps, un épaulement antérieur (11') de l'embout mâle (11), de même diamètre que l'alésage de l'embout femelle (7'), provoque le recul, dans le sens de la flèche (26), de l'élément tubulaire mobile (7) en prenant appui contre les billes (9) qui ne peuvent pas s'effacer en raison de la présence de la nervure (6) du corps (2). Ce recul de l'élément tubulaire (7) à l'encontre de la force du ressort (16) qui se comprime a pour effet de décaler la rangée de perforations (8) à l'intérieur du corps (2) par rapport à la nervure (6), autorisant alors les billes (9) à s'effacer par rapport à l'alésage de l'embout femelle (7') en étant refoulées radialement à l'extérieur, comme illustré sur la figure 3. Cet efface ment des billes (9) autorise l'engagement de l'embout mâle (11) à l'intérieur de l'embout femelle (7') jusqu'à ce que la gorge (12) de l'embout mâle (11) soit au-dessous de la rangée annulaire de billes (9), comme illustré sur la figure 2.

Comme le montre l'examen de la figure 2, la course du manchon (21) dans le sens de la flèche (26) a été stoppée par la butée fixe (24) avant que l'élément tubulaire mobile (7) n'ait lui-même terminé la sienne. Il en résulte un glissement de la bague (22) sur le manchon (21), dans le sens de la flèche (26), cette bague (22) entraînant avec elle la pince (25) et par conséquent son extrémité (25b) qui sert de butée. En glissant sur le bord antérieur (21c) du manchon (21) immobilisé par la butée (24), l'extrémité antérieure (25b) de la pince (25) se dilate jusqu'à dans la position illustrée sur la figure 2, position dans laquelle le diamètre de l'extrémité antérieure (25 b), de la pince (25) est superieur au grand diamètre de l'épaulement (19a). Il en résulte que l'épaulement (19a) de la tige (19) peut librement passer dans la pince (25), la butée que constitue son extrémité antérieure (25b) se trouvant effacée.

On obtient ainsi que l'embout mâle (11) peut être totalement engagé dans l'embout femelle (7') sans que le clapet (14) situé du côté de l'utilisation n'ait été ouvert. Dans cette position, l'embout mâle (11) est alors verrouillé dans l'embout femelle (7') par suite de la chute des billes (9) dans la gorge (12).

Lorsque le circuit d'alimentation est ensuite ouvert, le fluide d'alimentation pénètre, par l'alésage du raccord fileté (3) et par le passage (27) ménagé dans le corps (2) et l'orifice radial (28) ménagé dans l'élément tubulaire mobile (7), jusque dans l'alésage (29) de l'élément tubulaire (7) dont l'extrémité antérieure est libérée par le clapet (14). La pression du fluide d'alimentation étant supérieure à la pression résiduelle régnant dans le circuit d'utilisation, le clapet (13) situé du côté de l'utilisation est ouvert, ce qui libère le clapet (14) de toute contrainte puisque, dès ce moment, le fluide sous pression peut circuler librement depuis le circuit d'alimentation jusque dans le circuit d'utilisation. Le ressort de rappel (15) du clapet (14) peut donc librement ramener ce dernier dans sa position avancée dans laquelle il prend appui contre le clapet (13), lui-même en appui contre sa butée de fin de course d'ouverture, non visible sur le dessin.

Dans cette position, illustrée sur la figure 4, l'épaulement (19a) de la tige (19) du clapet (14) passe sous l'extrémité antérieure (25b) de la pince (25), de sorte que cette extrémité peut alors reprendre sa fonction de butée de fin de course d'ouverture du clapet (14).

Ainsi, toute fermeture intempestive du clapet (13) par suite d'une éventuelle inversion de débit est rendue impossible et cette butée restera en position active tant que l'embout mâle (11) ne sera pas déconnecté de l'embout femelle (7') et tant que l'on ne procèdera pas à une nouvelle connexion.

Il a été indiqué précédemment que la pince tronconique (25) était pourvue d'une extrémité de petit diamètre (25b) dilatable; cette propriété peut être facilement obtenue en découpant, dans la paroi tronconique de la pince (25), des fentes longitudinales créant des lamelles longitudinales dont le maintien en position normale est assuré par l'élasticité de la matière constitutive de cette pince, qui peut être en métal, en matière plastique ou en n'importe quelle autre matière appropriée.

## Revendication

Coupleur à clapets équipé de moyens (3) de raccordement rigide à une source de fluide sous pression, du type comportant un corps tubulaire externe (2) et logeant un élément tubulaire (7) axialement mobile dans les deux sens et dont l'extrémité antérieure (7') correspondant à l'extrémité libre (2') du corps tubulaire (2), qui constitue l'embout femelle du coupleur, porte, dans une rangée annulaire de perforations (8) leur servant de logements, des billes de verrouillage (9) destinées à être engagées et maintenues dans une gorge annulaire externe (12) prevue, à cet effet, au voisinage de l'extrémité de l'embout mâle (11) associé du coupleur, un ressort (16) de rappel tendant à ramener cet élément tubulaire (7) dans une position intermédiaire stable dans laquelle la rangée annulaire de perforations (8) logeant les billes de verrouillage (9) coïncide axialement avec une nervure radiale interne (6) à flancs coniques (6a, 6b) du corps tubulaire (2) pour maintenir les billes (9) en position de verrouillage, c'est-à-dire en saillie radialement à l'intérieur de l'alésage de l'élément tubulaire mobile (7) et ce dernier portant, du côté de son extrémité postérieure, un clapet (14) normalement maintenu en position de fermeture par un ressort de rappel (15) et destiné à être reculé en position ouverte par le clapet (13) de l'embout mâle (11), lorsque ce dernier est engagé dans l'embout femelle (7'), tandis qu'à chaque clapet (13, 14) sont associés un ressort de rappel et une butée de limitation de course d'ouverture sensible ment égale à la moitié de la course d'engagement de l'embout mâle (11) dans l'embout femelle (7'), et dans lequel la butée (25b) associée au clapet (14) situé du côté de l'alimentation et logé dans l'élément tubulaire mobile (7) est constituée par un organe qui s'escamote automatiquement lors de la connexion du coupleur et qui est automatiquement ramené en position active lors de l'ouverture du circuit d'alimentation, après verrouillage de l'embout mâle (11) dans l'embout femelle (7'), caractérisé en ce que le corps tubulaire externe (2) est équipé, à l'une (2'') de ses extrémités, de moyens (3) de raccordement rigide à la source de fluide sous pression et, d'une part, l'extrémité postérieure d'une tige (19) du clapet (14) situé du côté de l'alimentation est logée dis un manhon télescopique (21) porté, de manière étanche, par un moyeu (22) aménagé à l'extrémité postérieure de l'élément tubulaire mobile (7), une butée postérieure fixe (24) limitant la course de recul de ce manchon (21) à une valeur inférieure à celle de l'élément tubulaire (7) et, d'autre part, la butée de fin de course d'ouverture de ce clapet (14) est constituée par l'extrémité antérieure (25b) d'une pince annulaire tronconique (25) fixée, par son extrémité postérieure rigide de grand diamètre (25a), à la paroi interne de l'élément tubulaire mobile (7), cette extrémité antérieure (25b) de petit diamètre, élastiquement dilatable, étant normalement appliquée, simultanément contre le bord antérieur du manchon télescopique (21) qui entoure la tige (I9) du clapet (14) et contre la paroi externe cylindrique de cette tige (19), en arrière d'un épaulement (19a) tourné vers l'arrière, de plus grand diamètre quelle, et menagé à cet effet sur cette tige (19), le recul de l'élément tubulaire (7) sur une course supérieure à celle du manchon (21) ayant pour effet de dilater l'extrémité antérieure (25b) de la pince (25) et de lui faire adopter un diamètre supérieur à celui de l'épaulement (19a), en la faisant glisser sur le bord antérieur (21c) du manchon (21).

**Patentanspruch**

Ventilkupplung mit Mitteln (3) für den starren Anschluß an eine Druckfluidquelle, umfassend einen äußeren Rohrkörper (2), der ein axial in beiden Richtungen verschiebbares Rohrelement (7) aufnimmt, dessen vorderes, dem freien Ende (2') des Rohrkörpers (2) entsprechendes Ende (7'), welches die Aufnahmemuffe der Kupplung bildet, verriegelungskugeln (9) in einer ringartig angeordneten Reihe von denselben als Sitze dienenden Durchbrechungen (8) trägt, die dazu bestimmt sind, in eine äußere Ringnut (12) einzugreifen und in dieser gehalten zu werden, welche zu diesem Zweck im Bereich des Endes der zugehörigen Steckmuffe (11) der Kupplung ausgebildet ist, wobei eine Rückstellfeder (16) dieses Rohrelement (7) in eine stabile Zwischenstellung zu verschieben trachtet, in der die ringartige Reihe der die Verriegelungskugeln (9) aufnehmenden Durchbrechungen (8) in axialer Richtung mit einer inneren, mit konischen Seitenflanken (6a, 6b) versehenen radialen Rippe (6) des Rohrkörpers (2) zusammenfällt, die dazu dient, die Kugeln (9) in ihrer Verriegelungsstellung zu halten, bei der sie radial ins Innere der Bohrung des verschiebbaren Rohrelementes (7) ragen, wobei dieses letztere an der Seite seines hinteren Endes ein im Normalfall durch eine Rückstellfeder (15) in Schließstellung gehaltenes Ventil (14) trägt, welches von dem Ventil (13) der Steckmuffe (11) nach hinten in eine Öffnungsstellung verschoben wird, wenn diese in die Aufnahmemuffe (7') gesteckt wird, wobei ferner jedem Ventil (13, 14) jeweils eine Rückstellfeder und ein Anschlag zur Begrenzung des Öffnungsweges zugeordnet ist, welcher im wesentlichen der Hälfte des Einsteckweges der Steckmuffe (11) in die Aufnahmemuffe (7') gleich ist, wobei der dem Versorgungsseitigen, im verschiebbaren Rohrelement (7) angeordneten Ventil (14) zugeordnete Anschlag (25b) durch ein Organ gebildet wird, welches sich beim Koppeln der Kupplung automatisch zurückzieht und welches beim Öffnen des Versorgungskreises nach Verriegeln der Steckmuffe (11) in der Aufnahmemuffe (7') automatisch in seine aktive Position zurückgesetzt wird,
dadurch gekennzeichnet,
daß der äußere Rohrkörper (2) an einem (2'') seiner Enden mit Mitteln (3) für den starren Anschluß an die Druckfluidquelle ausgestattet ist und daß einerseits das hintere Ende eines an der Versorgungsseite angeordneten Stößels (19) des Ventils (14) in einer Teleskophülse (21) gelagert ist, die ihrerseits abdichtend von einer am hinteren Ende des verschiebbaren Rohrelementes (7) angeordneten Nahe (22) gehalten wird, wobei ein hinterer fester Anschlag (24) den Rückzugsweg dieser Hülse (21) auf einen Wert begrenzt, der kleiner als der des Rohrelementes (7) ist, und daß andererseits der Anschlag zur Begrenzung des Öffnungsweges des Ventils (14) vom vorderen Ende (25b) einer

kegelstumpfformigen Ringklemme (25) gebildet wird, die mit ihrem hinteren, starren Ende (25a) mit großem Durchmesser an der Innenwand des erschiebharen Rohrelementes (7) befestigt ist, wobei das vordere, elastisch aufweitbare Ende (25) mit kleinem Durchmesser normalerweise gleichzeitig gegen die Vorderkante der Teleskophülse (21), die den Stößel (19) des Ventils (4) umgibt, und gegen die zylindrische Außenwand dieses Stößels (19) hinter einer nach hinten gerichteten, zu diesem Zwecke am Stößel (19) ausgebildeten Schulter (19a) von gegenüber der Außenwand größerem Durchmesser anliegt, wobei die Rückzugsbewegung des Rohrelementes (7) über einem gegenüber dem der Hülse (21) größeren Weg zur Folge hat, daß das vordere Ende (25b) der Klemme (25) aufgeweitet wird und einen Durchmesser annimmt, der größer als der der Schulter (19a) ist, so daß es über die Vorderkante (21c) der Hülse (21) gleitet.


## Claim

A valve coupling equipped with means (3) for rigid connection to a source of fluid under pressure, of the type having an external tubular body (2) and housing a tubular element (7) movable axially in both directions and of which the front end (7') corresponding to the free end (2') of the tubular body (2), which constitutes the female end portion of the coupling, carries, in an annular row of openings (8) serving as housings, locking balls (9) intended to be engaged and held in an external annular groove (12) provided, for this purpose, in the vicinity of the end of the associated male end portion (11) of the coupling, a return spring (16) tending to bring this tubular element (7) into a stable intermediate position in which the annular row of openings (8) housing the locking balls (9) coincides axially with an internal radial rib (6) of the tubular body (2) having conical sides (6a, 6b) to hold the balls (9) in the locked position, that is to say projecting radially internally of the bore of the movable tubular element (7), the latter carrying, towards its rear end, a valve (14) normally held in the closed position by a return spring (15) and intended to be drawn back into the open position by the valve (13) of the male end portion (11) when the latter is engaged in the female end portion (7'), whilst there is associated with each of the valves (13, 14) a return spring and an abutment limiting the opening travel to an amount substantially equal to half the engagement travel of the male end portion (11) in the female end portion (7'), and in which the abutment (25b) associated with the valve (14) located on the supply side and housed in the movable tubular element (7) is constituted by a member which automatically retracts when the coupling is connected and which is automatically returned to the active position when the supply circuit is opened, after the male end portion (11) is locked in the female end portion (7'), characterised in that the external tubular body (2) is equipped at one of its ends (2'') with means (3) for rigidly connecting it to the source of fluid under pressure and, on the one hand, the rear end of a rod (19) of the valve (14) located on the supply side is housed in a telescopic sleeve (21) carried, in sealed manner, by a boss (22) formed at the rear end of the movable tubular element (7), a fixed rear abutment (24) limiting the return travel of the sleeve (21) to a value less than that of the tubular element (7) and, on the other hand, the end of opening travel abutment for the valve (14) is constituted by the front end (25b) of a truncated cone-shaped annular claw (25) fixed, by its large diameter rigid rear end (25a), to the internal wall of the movable tubular element (7), the small diameter front end (25b), which is resiliently expansible, being normally applied simultaneously against the front edge of the telescopic sleeve (21) which surrounds the rod (19) of the valve (14) and against the external cylindrical wall of said rod (19), rearwardly of a rearwardly facing shoulder (19a) of greater diameter than the rod formed for this purpose on the rod (19), the effect of the drawing back of the tubular element (7) over a travel greater than that of the sleeve (21) being to expand the front end (25b) of the claw (25) and to cause it to assume a diameter greater than that of the shoulder (19a), by making it slide on the front edge (21c) of the sleeve (21).

FIG.1

FIG.2

0 207 865

FIG.3

FIG.4

0 207 865